# EUROPEAN PATENT SPECIFICATION

(11) **EP 2 675 832 B1**
(45) Date of publication and mention of the grant of the patent: **25.03.2015**
(21) Application number: 12707417.7
(22) Date of filing: 14.02.2012
(51) Int. Cl.: C08G 18/44, C08G 18/66

(54) **HIGH TEMPERATURE HYDROCARBON RESISTANT POLYURETHANE ARTICLES**
POLYERETHANARTIKEL MIT KOHLENWASSERSTOFFBESTÄNDIGKEIT BEI HOHEN TEMPERATUREN
ARTICLES EN POLYURÉTHANE RÉSISTANT AUX HYDROCARBURES À HAUTE TEMPÉRATURE

(30) Priority: 15.02.2011 US 201161442895 P
(43) Date of publication of application: 25.12.2013
(73) Proprietor: Dow Global Technologies LLC, Midland, MI 48674 (US)
(72) Inventor: SINGH, Harpreet, Pearland TX 77584 (US); BARNES, Michael, J., Acworth, GA 30102 (US); HEATH, William, H., Lake Jackson, TX 77566 (US); SINGH, Amarnath, Pearland, TX 77584 (US)
(74) Representative: Beck Greener
(86) International application number: PCT/US2012/024952
(87) International publication number: WO 2012/112475

(56) References cited:
- EP-A1- 0 459 459
- WO-A1-90/11310
- WO-A1-03/076542
- US-A- 3 526 572

## Description

### BACKGROUND OF THE INVENTION

### Field of the Invention

Embodiments of the invention generally relate to polyurethanes having resistance to hydrocarbons and articles made therefrom.

### Description of the Related Art

Conventional polyurethanes generally have poor resistance to hydrocarbons at high temperatures, such as, temperatures greater than 100 degrees Celsius. That is, most polyurethanes tend to degrade, swell, or dissolve in the presence of hydrocarbons. This property severely restricts the range of utility for articles comprising such conventional polyurethanes used in the presence of hydrocarbons.

US 3 526 572 discloses the production of a hydrocarbon resistant container. The hydrocarbon resistant polyurethane coating used to prepare this container is based on an aliphatic polycarbonate diol having a molecular weight of 1900 and an aromatic diisocyanate (toluene diisocyanate).

In EP 0 459 459 an oil resistant polyurethane adhesive coating layer is disclosed, prepared from poly(hexamethylene)carbonate, butane diol (chain extender) and 4,4'-diphenylmethanediisocyanate.

Thus it is desirable to provide polyurethane articles that are resistant to hydrocarbons at high temperatures.

### SUMMARY OF THE INVENTION

Embodiments of the invention generally relate to polyurethanes having resistance to hydrocarbons and articles made therefrom. In one embodiment, a hydrocarbon resistant polycarbonate elastomer containing article is provided. The hydrocarbon resistant polycarbonate elastomer is prepared from a reaction mixture comprising (a) one or more difunctional polycarbonate polyols comprising repeating units from one or more alkane diols having 2 to 20 carbon atoms with a number average molecular weight between 500 and 3,000, and (b) one or more organic polyisocyanate components, wherein the article is selected from filter caps, conduits, containers, seals, mechanical belts, liners, coatings, rollers and machine parts.

### BRIEF DESCRIPTION OF THE DRAWINGS

So that the manner in which the above-recited features of the present invention can be understood in detail, a more particular description of the invention, briefly summarized above, may be had by reference to embodiments, some of which are illustrated in the appended drawings. It is to be noted, however, that the appended drawings illustrate only typical embodiments of this invention and are therefore not to be considered limiting of its scope, for the invention may admit to other equally effective embodiments.
FIG. 1 represents a perspective view of one embodiment of a filter;
FIG. 2 represents a perspective view of one embodiments of the endcaps of the filter of FIG. 1;
FIG. 3 represents a perspective view of one embodiments of a gasket;
FIG. 4 represents a cutaway perspective view of one embodiment of a lined chute;
FIG. 5 represents a perspective view of one embodiment of a roller;
FIG. 6 represents a perspective view of one embodiment of a mechanical belt;
FIG. 7 represents a perspective view of one embodiment of a gear;
FIG. 8 represents a perspective view of one embodiment of a gear having an outer layer, partially in section;
FIG. 9 represents a perspective view of one embodiment of a conduit;
FIG. 10 represents a perspective view of one embodiment of a container; and
FIG. 11 represents a plot depicting the tensile strength retention for elastomer samples in a high temperature carbon soak test.

To facilitate understanding, identical reference numerals have been used, where possible, to designate identical elements that are common to the figures. It is contemplated that elements disclosed in one embodiment may be beneficially utilized on other embodiments without specific recitation.

### DETAILED DESCRIPTION

Embodiments of the invention generally relate to polyurethanes having resistance to hydrocarbons and articles made therefrom. More particularly, embodiments of the invention generally relate to articles comprising hydrocarbon resistant polycarbonate elastomers, made from polycarbonate polyols, that are resistant to hydrocarbons at high temperatures. It has been found by the inventors that the hydrocarbon resistant polycarbonate elastomers described herein maintain their dimensional stability when exposed to hydrocarbons, such as diesel fuel, at temperatures up to at least 121 degrees Celsius.

In one embodiment, a hydrocarbon resistant polycarbonate elastomer containing article is prepared from a reaction mixture comprising (a) one or more difunctional polycarbonate polyols comprising repeating units from one or more alkane diols having 2 to 20 carbon atoms, (b) one or more organic polyisocyanate components, and (c) a chain extender comprising diols having 2 to 6 carbon atoms.

Component (a) may comprise one or more difunctional polycarbonate polyols. The one or more difunctional polycarbonate polyols may comprise repeating units from one or more alkane diols having 2 to 20 carbon atoms.

The one or more difunctional polycarbonate polyols may have a number average molecular weight from about 500 to about 5,000, preferably, from about 500 to about 3,000, more preferably, from about 1,800 to about 2,200.

The one or more difunctional polycarbonate polyols may have a hydroxyl number average from about 22 to about 220 mg KOH/g, for example, from about 51 to 61 mg KOH/g.

The one or more difunctional polycarbonate polyols may have a viscosity from about 4,000 to about 15,000 centipose (cp) measured at 60 degrees Celsius by parallel plate rheometry.

The one or more difunctional polycarbonate polyols may be prepared by reacting at least one polyol mixture comprising one or more alkane diols with at least one organic carbonate. The one or more difunctional polycarbonate polyols may be obtained by subjecting at least one polyol mixture and at least one carbonate compound to a polymerization reaction. With respect to the method for performing the polymerization reaction, there is no particular limitation, and the polymerization reaction can be performed by using conventional methods known in the art.

The one or more alkane diols may be selected from the group comprising aliphatic diols having 4 to 50 carbon atoms in the chain (branched or unbranched) which may also be interrupted by additional heteroatoms such as oxygen (O), sulphur (S) or nitrogen (N). Examples of suitable diols are 1,4-butanediol, 1,5-pentanediol, 1,6-hexandiol, 1,7-heptanediol, 1,2-dodecanediol, cyclohexanedimethanol, 3-methyl-1,5-pentanediol, 2,4-diethyl-1,5-pentanediol, bis(2-hydroxyethyl)ether, bis(6-hydroxyhexyl)ether or short-chain C₂, C₃ or C₄ polyether diols having a number average molecular weight of less than 700 g/mol, and also combinations thereof. Exemplary polycarbonate polyols comprising repeating units from one or more alkane diol components are available from Arch Chemicals, Inc., under the trade name Poly-CD™220 carbonate diol and from Bayer MaterialScience, LLC, under the tradename DESMOPHEN® polyols.

The at least one carbonate compound may be selected from alkylene carbonates, diaryl carbonates, dialkyl carbonates, dioxolanones, hexanediol bis-chlorocarbonates, phosgene and urea. The alkylene carbonates may include ethylene carbonate, trimethylene carbonate, 1,2-propylene carbonate, 5-methyl-1,3-dioxane-2-one, 1,2-butylene carbonate, 1,3-butylene carbonate, 1,2-pentylene carbonate, and the like. Moreover, dialkyl carbonates may include dimethyl carbonate, diethyl carbonate, di-n-butyl carbonate, and the like and the diaryl carbonates may include diphenyl carbonate.

The polymerization reaction may be aided by a catalyst. Examples of the catalyst may include metals such as lithium, sodium, potassium, rubidium, cesium, magnesium, calcium, strontium, barium, titanium, zirconium, hafnium, cobalt, zinc, aluminum, germanium, tin, lead, antimony, arsenic, and cerium and compounds thereof. As the metallic compounds, oxides, hydroxides, salts, alkoxides, organic compounds, and the like may be mentioned. Of these catalysts, it is preferred to use titanium compounds such as titanium tetrabutoxide, titanium tetra-n-propoxide, titanium tetra-isopropoxide, and titanium 2-ethyl hexanoate, tin compounds such as di-n-butyltin dilaurate, di-n-butyltin oxide, and dibutyltin diacetate, lead compounds such as lead acetate and lead stearate.

Component (a) may comprise at least 40 wt.%, 45 wt.%, 50 wt.%, 55 wt.%, 60 wt.%, 65 wt.%, 70 wt.%, 75 wt.%, 80 wt.%, or 85 wt.% of the total reaction system. Component (a) may comprise up to 45 wt.%, 50 wt.%, 55 wt.%, 60 wt.%, 65 wt.%, 70 wt.%, 75 wt.%, 80 wt.%, 85 wt.%, or 90 wt.% of the total reaction system. In certain embodiments, component (a) may comprise from 40 wt.% to about 90 wt.% or from 60 wt.% to 80 wt.% of the total reaction system.

Component (b) may comprise one or more organic polyisocyanate components. The isocyanate functionality is preferably from about 1.9 to 4, and more preferably from 1.9 to 3.5 and especially from 2.0 to 3.3. The one or more organic polyisocyanate components may be selected from the group comprising a polymeric polyisocyanate, aromatic isocyanate, cycloaliphatic isocyanate, or aliphatic isocyanates. Exemplary polyisocyanates include, for example, m-phenylene diisocyanate, 2,4- and/or 2,6-toluene diisocyanate (TDI), the various isomers of diphenylmethanediisocyanate (MDI), and polyisocyanates having more than 2 isocyanate groups, preferably MDI and derivatives of MDI such as biuret-modified "liquid" MDI products and polymeric MDI (PMDI), 1,3 and 1,4-(bis isocyanatomethyl)cyclohexane, isophorone diisocyanate (IPDI), hexamethylene diisocyanate (HDI), bis(4-isocyanatocyclohexyl)methane or 4,4' dimethylene dicyclohexyl diisocyanate (H12MDI), and combinations thereof, as well as mixtures of the 2,4- and 2,6-isomers of TDI, with the former most preferred in the practice of the invention. A 65/35 weight percent mixture of the 2,4 isomer to the 2,6 TDI isomer is typically used, but the 80/20 weight percent mixture of the 2,4 isomer to the 2,6 TDI isomer is also useful in the practice of this invention and is preferred based on availability. Pure 100% 2,4 TDI may also be used. Suitable TDI products are available under the trade name VORANATE™ which is available from The Dow Chemical Company. Preferred isocyanates include methylene diphenyl diisocyanate (MDI) and or its polymeric form (PMDI) for producing the prepolymers described herein. Such polymeric MDI products are available from The Dow Chemical Company under the trade names PAPI® and VORANATE®. Suitable commercially available products of that type include PAPI™ 94 and PAPI™ 27 which are available from The Dow Chemical Company.

Component (b) may comprise at least 15 wt.%, 20 wt.%, 25 wt.%, 30 wt.%, 35 wt.%, 40 wt.%, or 45 wt.% of the total reaction system. Component (b) may comprise up to 20 wt.%, 25 wt.%, 30 wt.%, 35 wt.%, 40 wt.%, 45 wt.%, or 50 wt.% of the total reaction system. In certain embodiments, component (b) may comprise from 15% to 50% by weight or from about 20% to 25% by weight of the total reaction system.

The reaction system may further comprise (c) one or more chain extenders. A chain extender is a material having two isocyanate-reactive groups per molecule. In either case, the equivalent weight per isocyanate-reactive group can range from about 30 to less than 100, and is generally from 30 to 75. The isocyanate-reactive groups are preferably aliphatic alcohol, primary amine or secondary amine groups, with aliphatic alcohol groups being particularly preferred. The chain extender is typically used in quantities such as up to 20 wt.%, up to 15 wt.%, up to 10 wt.%, or up to 5 wt.% of the total reaction system. In certain embodiments, the chain extender is from 0.015 to 10% by weight of the total reaction system.

Representative chain extenders include ethylene glycol, diethylene glycol, 1,3-propane diol, 1,3-butanediol, 1,4-butanediol, dipropylene glycol, 1,2-butylene glycol, 2,3-butylene glycol, 1,6-hexanediol, neopentylglycol, tripropylene glycol, 1,2-ethylhexyldiol, ethylene diamine, 1,4-butylenediamine, 1,6-hexamethylenediamine, 1,5-pentanediol, 1,3-cyclohexandiol, 1,4-cyclohexanediol; 1,3-cyclohexane dimethanol, 1,4-cyclohexane dimethanol, N-methylethanolamine, N-methyliso-propylamine, 4-aminocyclohexanol, 1,2-diaminotheane, 1,3-diaminopropane, hexylmethylene diamine, methylene bis(aminocyclohexane), isophorone diamine, 1,3-bis(aminomethyl), 1,4-bis(aminomethyl) cyclohexane, diethylenetriamine, 3,5-diethyltoluene-2,4-diamine and 3,5-diethyltoluene-2,6-diamine, and mixtures or blends thereof. Suitable primary diamines include for example dimethylthiotoluenediamine (DMTDA) such as Ethacure 300 from Albermarle Corporation, diethyltoluenediamine (DETDA) such as Ethacure 100 from Albemarle (a mixture of 3,5-diethyltoluene-2,4-diamine and 3,5-diethyltoluene-2,6-diamine), isophorone diamine (IPDA), and dimethylthiotoluenediamine (DMTDA).

The reaction system may further comprise one or more catalyst components (d). Catalysts are typically used in small amounts, for example, each catalyst being employed from 0.0015 to 5% by weight of the total reaction system. The amount depends on the catalyst or mixture of catalysts and the reactivity of the polyols and isocyanate as well as other factors familiar to those skilled in the art.

Although any suitable catalyst may be used. A wide variety of materials are known to catalyze polyol reactions including amine-based catalysts and tin-based catalysts. Preferred catalysts include tertiary amine catalysts and organotin catalysts. Examples of commercially available tertiary amine catalysts include: trimethylamine, triethylamine, N-methylmorpholine, N-ethylmorpholine, N,N-dimethylbenzylamine, N,N-dimethylethanolamine, N,N-dimethylaminoethyl, N,N,N',N'-tetramethyl-1,4-butanediamine, N,N- dimethylpiperazine, 1,4-diazobicyclo-2,2,2-octane, bis(dimethylaminoethyl)ether, triethylenediamine and dimethylalkylamines where the alkyl group contains from 4 to 18 carbon atoms. Mixtures of these tertiary amine catalysts are often used.

Examples of commercially available amine catalysts include NIAX™ A1 and NIAX™ A99 (bis(dimethylaminoethyl)ether in propylene glycol available from Momentive Performance Materials), NIAX™ B9 (N,N-dimethylpiperazine and N-N-dimethylhexadecylamine in a polyalkylene oxide polyol, available from Momentive Performance Materials), DABCO® 8264 (a mixture of bis(dimethylaminoethyl)ether, triethylenediamine and dimethylhydroxyethyl amine in dipropylene glycol, available from Air Products and Chemicals), DABCO 33LV® (triethylene diamine in dipropylene glycol, available from Air Products and Chemicals), DABCO® BL-11 (a 70% bis-dimethylaminoethyl ether solution in dipropylene glycol, available from Air Products and Chemicals, Inc), NIAX™ A-400 (a proprietary tertiary amine/carboxylic salt and bis (2-dimethylaminoethyl)ether in water and a proprietary hydroxyl compound, available from Momentive Performance Materials); NIAX™ A-300 (a proprietary tertiary amine/carboxylic salt and triethylenediamine in water, available from Momentive Performance Materials); POLYCAT® 58 (a proprietary amine catalyst available from Air Products and Chemicals), POLYCAT® 5 (pentamethyl diethylene triamine, available from Air Products and Chemicals) POLYCAT® 8 (N,N-dimethyl cyclohexylamine, available from Air Products and Chemicals) and POLYCAT® 41 (a proprietary amine catalyst available from Air Products and Chemicals).

Examples of organotin catalysts are stannic chloride, stannous chloride, stannous octoate, stannous oleate, dimethyltin dilaurate, dibutyltin dilaurate, other organotin compounds of the formula SnRₙ(OR)₄₋ₙ, wherein R is alkyl or aryl and n is 0-2, and the like. Organotin catalysts are generally used in conjunction with one or more tertiary amine catalysts, if used at all. Commercially available organotin catalysts of interest include KOSMOS® 29 catalyst (stannous octoate from Evonik AG), DABCO® T-9 and T-95 catalysts (both stannous octoate compositions available from Air Products and Chemicals).

Additives such as surface active agents, antistatic agents, plasticizers, fillers, flame retardants, pigments, stabilizers such as antioxidants, fungistatic and bacteriostatic substances and the like are optionally used in the reaction system.

It is known that polyether polyols are prone to thermo oxidative degradation at high temperatures. The ether linkage in the presence of oxygen or any other species that can generate a free radical is prone to degradation. Polyesters are generally considered to be stable to hydrocarbons due to the polar ester linkage in the backbone. The polyester linkages are however susceptible to degradation by additives present in the hydrocarbon especially additives which have hydroxyl linkages that can hydrolyze the polyester linkages. Polycarbonate linkages due to the nature of its backbone are more stable than polyesters and perform better at high temperatures. For example, the embodiments of the present invention may not degrade at temperatures at temperatures up to at least 100, 110, 120, 121, 130, 140 or 150 degrees Celsius. Furthermore the embodiments of the invention may exhibit a loss in tensile strength of less than 5, 10, 15, or 20% at these temperatures.

Embodiments of the present invention are suitable for applications in which the hydrocarbon resistant article is exposed to hydrocarbons preferably when used in the form of hydrocarbon resistant conduits, containers, seals, mechanical belts, linings, coatings, rollers, machine parts and the like. Conduits include, for example, pipes, hoses, tubing, gasoline lines, and the like. Containers include, for example, tanks, bottles, flasks, pans, and the like. Mechanical belts include, for example, belts which transfer energy from such energy sources as engines, turbines and the like to other moving apparatus such as fans, other parts of engines and the like, such as automotive belts, truck belts, pump belts and the like as well as belts used for transport such as conveyor belts and the like. Seals include, for example, gaskets; adhesive seals which serve an adhesive function such as hydrocarbon filter seals including fuel filter endcaps; pipe seals; adhesive construction seals and the like; seals which fill gaps such as construction seals, door seals, window seals, shingle seals, and the like; o-rings, and the like; and any polyurethane article which separates other articles and reduces gaps between said articles. Linings include, for example, linings of conduits, containers and the like, such as linings for hoses, pipes, tubing, tanks, bottles, boilers, pans and the like. Coatings include, for example, surface coverings and other coatings on any object, preferably on an object which may contact or be immersed in hydrocarbons, such a conduit, container, roller, machine part and the like. Machine parts include gears, parts for such equipment as oil field equipment, down-hole equipment, engine parts, pump parts (particularly parts for pumps for petroleum and petroleum products) and the like. Rollers include textile rollers, printing rollers, paper mill rollers, metal processing rollers and the like.

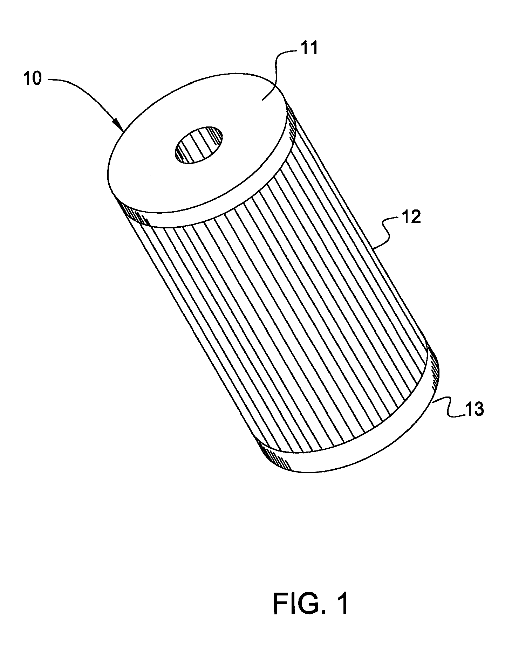

Exemplary of a type of seal of particular utility is a filter endcap for a hydrocarbon filter. A filter endcap is an object which is at one or more ends of a hydrocarbon filter. Advantageously, the filter endcap fits between the filter and a housing for the filter. Preferably, a filter endcap also confines flow of hydrocarbon so that it goes through the filter. Hydrocarbons suitably filtered include petroleum products such as fuels, feedstocks and the like, lubricants, such as oils and the like and other hydrocarbon materials such as solvents, cleaning fluids, and the like. One typical configuration of a filter having two endcaps is shown in FIG. 1. In FIG. 1, there is a cylindrical filter, 12, having a first endcap 11 and a second endcap 13. Filter 12, as illustrated, is a cylindrical pleated paper filter. Other configurations of filters, for example, generally tubular but having any cross section such as square, rectangular, triangular, or other polygonal cross sections are suitable. Also, the material can be any foraminous material suitable for retaining undesirable materials and allowing the desirable hydrocarbons to pass through. Such materials are known to those skilled in the art. While the filter need not be pleated, an arrangement such as pleating, folding or twisting which allows exposure of the hydrocarbon to a larger surface area than is otherwise available is generally preferable. Each endcap is preferably molded to an end of the filter 12. Those skilled in the art can mold such an endcap onto a filter without undue experimentation. Advantageously, the filter is introduced into a mold for the endcap before the endcap-forming formulation completely hardens, preferably before the formulation is introduced into the mold.

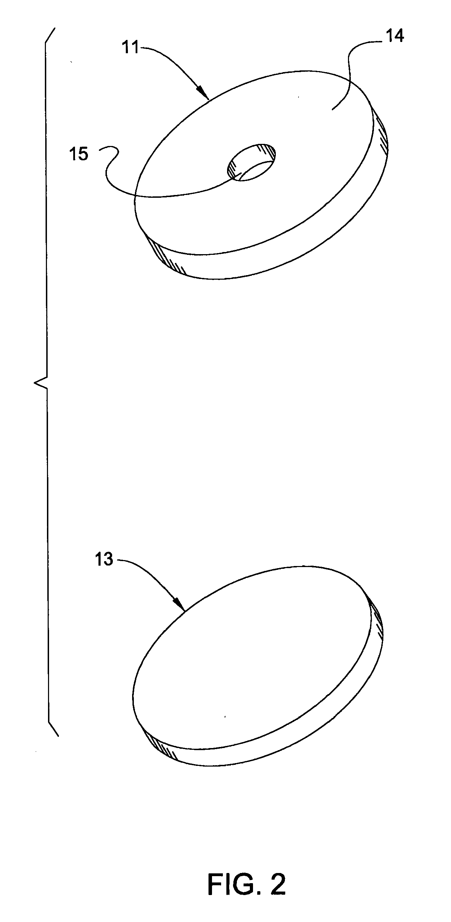

As illustrated in FIG. 2, endcap 11 is of generally a disk shape having a hole 15 generally through the center. The endcap also has an outer surface 14. In the illustrated embodiment, the second endcap 13 has a disk shape without a hole. Endcaps 11 and 13 preferably fit against the filter 12 such that hydrocarbons entering at the hole 15 must flow through the filter 12. There is preferably a housing around the filter. When there is a housing, it would include a means for admitting a hydrocarbon such that an entering hydrocarbon flow would be through the hole 15 then through the filter 12 to become filtered hydrocarbons. The housing would preferably include a means for confining filtered hydrocarbons such that said hydrocarbons do not mix with incoming hydrocarbons. The housing would also preferably include means for guiding filtered hydrocarbons from the filter.

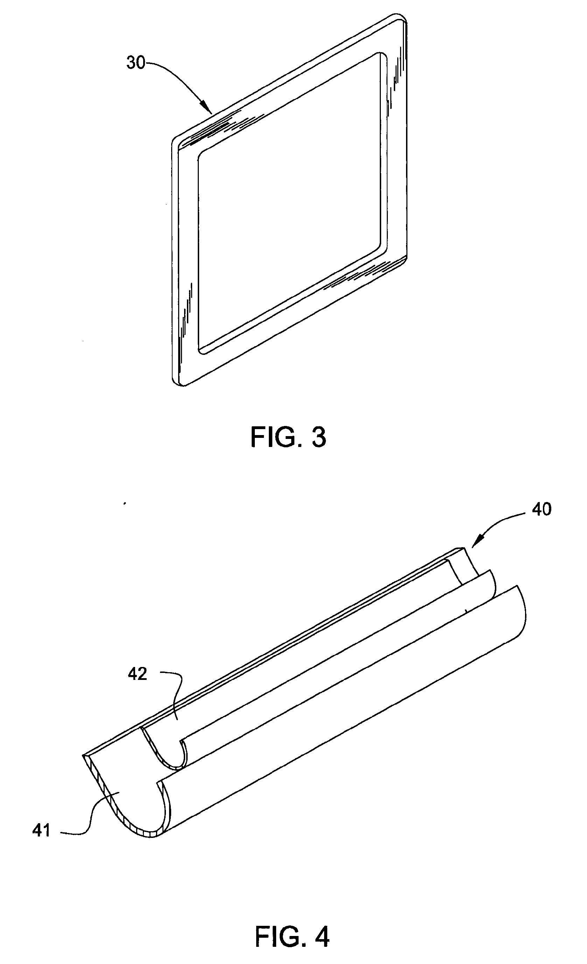

FIG. 3 represents a perspective view of one embodiment of a gasket 30 according to embodiments described herein. The gasket 30 has a generally rectangular shape and is exemplary of the seals of the invention. Those skilled in the art are able to form seals of the invention without undue experimentation. Preferably the seals are cast or molded.

FIG. 4 represents a cut away perspective view of one embodiment of a lined chute 40 according to embodiments described herein. The chute 40 has a structural member 41 in a curved shape suitable for guiding materials. Structural member 41 is suitably made of any material, preferably one strong enough to retain structural shape and integrity and support the weight of the chute and the materials guided, such as metal or plastic. The chute 40 additionally has a lining 42 suitably formed according to embodiments described herein. The lining 42 is preferably adhered to structural member 41. The lining 42 is exemplary of linings of the invention. Those skilled in the art are able to form linings for conduits, containers and similar articles without undue experimentation.

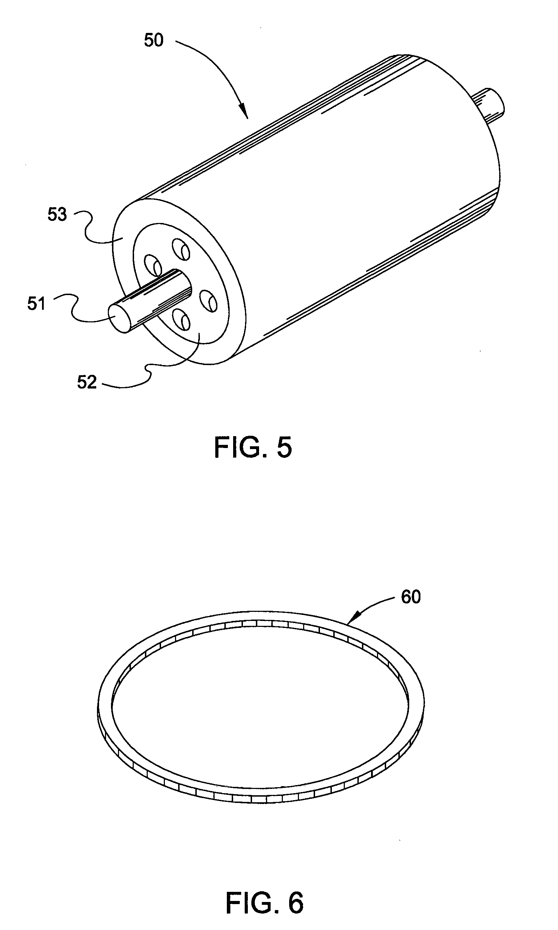

FIG. 5 represents a perspective view of one embodiment of a roller 50 having a shaft 51, an inner cylinder 52 and an outer portion 53. Shaft 51 and inner cylinder 52 are suitably formed from any material suitable for maintaining structural integrity and function. Such materials include metals, plastics and the like. Outer portion 53, and optionally shaft 51 and/or inner cylinder 52 are suitably formed from the hydrocarbon resistant polycarbonate elastomer described herein. Roller 50 is exemplary of rollers of the invention. Advantageously, a roller has one member serving the combined functions of inner cylinder 52 and outer portion 53, said member being formed of the polyurethane polymer of the invention. Those skilled in the art are able to form rollers of the invention without undue experimentation. Preferably the rollers are cast or molded. Suitably, an outer portion as illustrated by 53 in FIG. 5 may be coated onto an inner cylinder as represented by 52 in FIG. 5.

FIG. 6 represents a perspective view of one embodiments of a mechanical belt 60. The mechanical belt 60 is suitably ring-shaped as illustrated or may have another configuration suitable for use as a belt such as a more oval shape than illustrated. The belt is suitably formed of the hydrocarbon resistant polycarbonate elastomer described herein. Those skilled in the art are able to form belts of the invention without undue experimentation. Preferably the belts are cast or molded.

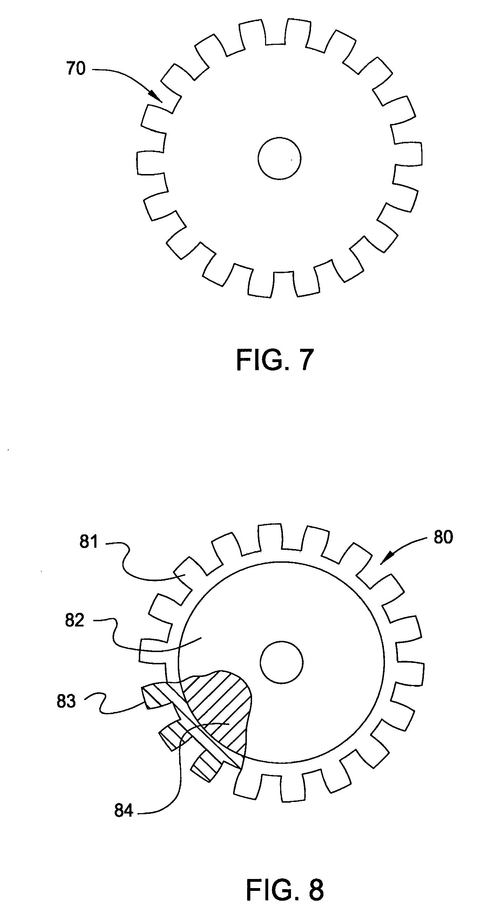

FIG. 7 represents a perspective view of a gear 70 suitably formed of the hydrocarbon resistant polycarbonate elastomer described herein. Preferably the gears are cast or molded.

FIG. 8 represents a perspective view of one embodiment of a gear 80, having an inner layer 81 and an outer layer 82. The gear 80 is partially cut away illustrating the composition of layer 82 in cut away 84 as metal and illustrating the composition of outer layer 83 as plastic. Outer layer 82 is suitably formed of the hydrocarbon resistant polycarbonate elastomer described herein. In other embodiments of the invention the inner layer is suitably formed of any material such as a metal or plastic having sufficient strength, hardness and wearing qualities suitable for the function of the gear. Those skilled in the art are able to form gears of the invention without undue experimentation. When there are inner and outer layers of the gear, the gear is preferably formed by compression molding or extrusion.

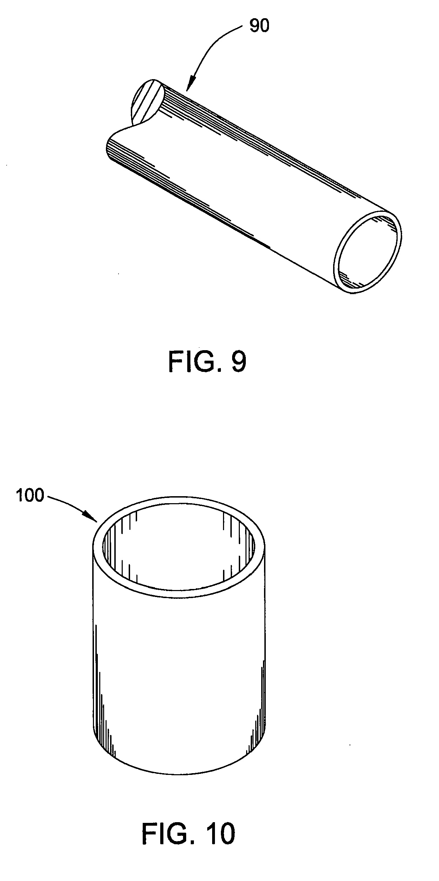

FIG. 9 represents a perspective view of one embodiment of a conduit 90 suitably formed of the hydrocarbon resistant polycarbonate elastomer described herein.

FIG. 10 represents a perspective view of a container 100 suitably formed of the hydrocarbon resistant polycarbonate elastomer described herein. Those skilled in the art are able to form conduits and containers of the invention without undue experimentation. Preferably the conduits and containers are cast or molded.

Those skilled in the art will recognize that the hydrocarbon resistant polycarbonate elastomer described herein is particularly suitable for other applications in which the polymer is exposed to hydrocarbons or other materials which similarly swell commonly-encountered polyurethanes.

### EXAMPLES

Objects and advantages of the embodiments described herein are further illustrated by the following examples. The particular materials and amounts thereof, as well as other conditions and details, recited in these examples should not be used to limit embodiments described herein. Unless stated otherwise all percentages, parts and ratios are by weight. Examples of the invention are numbered while comparative samples, which are not examples of the invention, are designated alphabetically.

A description of the raw materials used in the examples is as follows.

Polyol A is a polycarbonate polyol having an average molecular weight of about 2,000, commercially available as POLY-CD™220 carbonate diol from Arch Chemicals, Inc.

Polyol B is a polyester polyol which is a copolymer of glycerine, diethylene glycol and adipic acid with an average functionality of 2.9 and a hydroxyl number of 74 commercially available as STEPANPOL™ AA60 from the Stepan Company.

Polyol C is an ether polyol (Poly(tetra)methylene) glycol (PTMEG) with a number average molecular weight of approximately 2,000 and a hydroxyl number of 60 commercially available as TERATHANE® 2000 from INVISTA™.

The chain extender is 1,4 butane diol commercially available from Sigma-Aldrich Company.

The amine catalyst is a moderately active trimerization catalyst commercially available as POLYCAT® 41 from Air Products and Chemicals.

The isocyanate is polymeric MDI (PMDI) with a functionality of 2.7, commercially available as PAPI™ 27 from The Dow Chemical Company.

### Example 1 and Comparative samples A and B:

Example 1 and comparative samples A and B were filter caps made using the formulations depicted in Table I. For example 1, the amounts and types of polycarbonate polyol, chain extender, and amine catalyst were mixed at 60 degrees Celsius using a FlackTek SpeedMixer™ mixer at 2,350 rpm for twenty seconds. The isocyanate component was added to the mixture and the final mixture was mixed at 2,350 rpm for 20 seconds. The material was poured in a mold and a pleated paper filter was hand potted. The elastomer was cured for 2 minutes before demolding. The molded filter caps were fully cured at room temperature for 24 hours before any further testing. Test plaques were also made with the formulation for tensile testing. The test plaques were made by pouring the formulation between a TEFLON® polymer coated aluminum sheet and compression molded at 50 degrees Celsius at 20,000 psi for 30 minutes. The plaques were cured overnight at 80 degrees Celsius and then used for further testing. Sample A and sample B were each prepared using a similar process.

The tensile properties of the elastomers were obtained on microtensile bar samples that were punched out from the plaques. The bar samples were dogbone shaped with a width of 0.815 inches and length of 0.827 inches. The tensile properties were measured using a Monsanto Tensometer from Alpha technologies. The dogbones were clamped pneumatically and pulled at a strain rate of 5 inches/minute.

The fitler caps and dogbones were exposed to No. 2 Diesel fuel at 121 degrees Celsius for 500 hours. The filter caps were removed and visibly inspected for visual degradation. Only the PC polyol based elastomer filter cap (example 1) survived the test. The filter cap based on the polyether formulation (sample B) completely degraded and the filter cap based on the polyester formulation (sample A) showed visible swelling.

The tensile properties of the dogbones before and after ageing were compared. The data is shown in the Table II below. Polyether samples were not available for this study. PTMEG with a number average molecular weight of about 2,000 obtained from INVISTA™ was used as an ether substitute. The samples were marked as pass if the drop in tensile strength after exposure was less than 20%. Table II clearly shows that both the ester and ether did not pass the test. Surprisingly PC performed exceptionally well in this test.

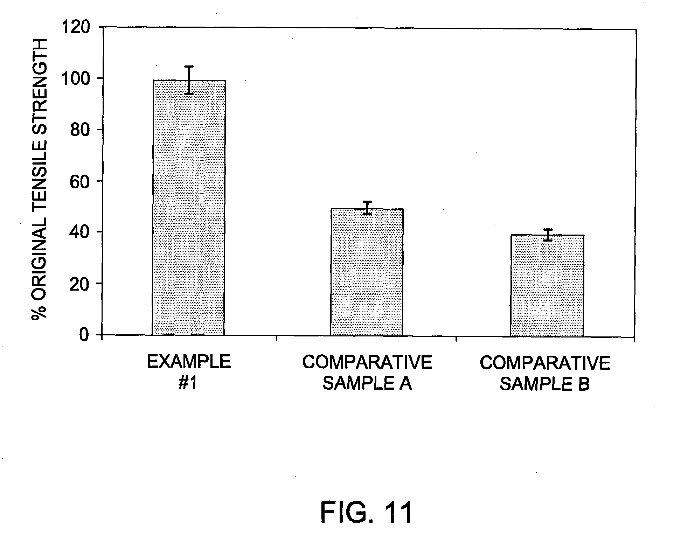

FIG. 11 represents a plot depicting the .tensile strength retention for elastomer samples in a high temperature carbon soak test. The y-axis represents the % original tensile strength and the x-axis depicts the example/sample number as follows example #1 (CD220), comparative sample A (AA60), and comparative sample B (PTMEG). The PC based elastomer showed better performance than the ester based elastomers in the high temperature carbon soak test.
**Table I. Filter Cap Formulations**

| **Raw Material** | **Example 1** | **Comparative Sample A** | **Comparative Sample B** |
|---|---|---|---|
| **Polyol A** | 94.6 g | | |
| **Polyol B** | | 89.8 g | |
| **Polyol C** | | | 94.6 |
| **Chain Extender** | 5.04 g | 9.6 g | 5.04 g |
| **Amine Catalyst** | 0.3 g | 0.575 g | 0.3 g |
| **Isocyanate** | 27 g | 44.2 | 27 g |

**Table II. Retention In Tensile Strength**

| | **Example 1** | **Comparative Sample A** | **Comparative Sample B** |
|---|---|---|---|
| **% Retention In Tensile Strength** | **100%** | **50%** | **45%** |

While the foregoing is directed to embodiments of the invention, other and further embodiments of the invention may be devised without departing from the basic scope thereof.

## Claims

1. A hydrocarbon resistant polycarbonate elastomer containing article prepared from a reaction mixture comprising:
(a) one or more difunctional polycarbonate polyols comprising repeating units from one or more alkane diols having 2 to 20 carbon atoms with a number average molecular weight between 500 and 3,000;
(b) one or more organic polyisocyanate components, which are polymeric polyisocyanates; and
(c) one or more chain extenders,
wherein the article is selected from filter caps, conduits, seals, mechanical belts, rollers and machine parts.

2. The article of claim 1, wherein the reaction mixture comprises:
at least 70 wt.% of said one or more difunctional polycarbonate polyols; and up to 10 wt.% of said one or more chain extenders.

3. The article of claims 1 or 2, wherein the reaction mixture further comprises:
(d) one or more amine catalysts.

4. The article of claims 1 to 3, wherein the one or more alkane diols is selected from the group consisting of 1,6-hexanediol, 1,4-butanediol, neopentyl glycol, and combinations thereof.

5. The article of claims 1 to 4, wherein the polymeric polyisocyanate is polymeric methylene diphenyl diisocyanate.

6. The article of claims 1 to 6, wherein the article is a filter cap.

7. The filter cap of claim 6, wherein the loss in tensile strength of the filter cap is less than 20% after ageing for 500 hours at 121 degrees Celsius.

8. The article of claims 1 to 7, wherein the reaction mixture comprises:
from 40 to 90 percent by weight based on the combined weights of (a) and (b) of the one or more difunctional polycarbonate polyols; and
from 15 to 50 percent by weight based on the combined weights of (a) and (b) of the one or more organic polyisocyanate components.

9. The article of claims 1 to 7, wherein the reaction mixture comprises:
from 40 to 90 percent by weight based on the combined weights of (a) and (b) of the one or more difunctional polycarbonate polyols; and
from 15 to 50 percent by weight based on the combined weights of (a) and (b) of a polymethylene polyphenylisocyanate that contains diphenylmethane diisocyanate (MDI).

10. The article of claims 1 to 9, wherein the one or more chain extenders is selected form the group comprising ethylene glycol, diethylene glycol, triethylene glycol, tetraethylene glycol, propylene glycol, dipropylene glycol, triprpopylene glycol, 1,4 butanediol, and diethyl toluene diamine.

11. The article of claim 1 wherein the article is a seal.

## Patentansprüche

1. Ein kohlenwasserstoffbeständiger Polycarbonatelastomer enthaltender Artikel, hergestellt aus einem Reaktionsgemisch, beinhaltend:
(a) ein oder mehrere difunktionelle Polycarbonatpolyole, beinhaltend sich wiederholende Einheiten von einem oder mehreren Alkandiolen mit 2 bis 20 Kohlenstoffatomen mit einem Zahlenmittel der Molmasse zwischen 500 und 3000;
(b) eine oder mehrere organische Polyisocyanatkomponenten, die polymere Polyisocyanate sind; und
(c) ein oder mehrere Kettenverlängerungsmittel,
wobei der Artikel ausgewählt ist aus Filterkappen, Leitungen, Dichtungen, mechanischen Riemen, Rollen und Maschinenteilen.

2. Artikel gemäß Anspruch 1, wobei das Reaktionsgemisch Folgendes beinhaltet:
zu mindestens 70 Gew.-% das eine oder die mehreren difunktionellen Polycarbonatpolyole; und zu bis zu 10 Gew.-% das eine oder die mehreren Kettenverlängerungsmittel.

3. Artikel gemäß Anspruch 1 oder 2, wobei das Reaktionsgemisch ferner Folgendes beinhaltet:
(d) einen oder mehrere Amin-Katalysatoren.

4. Artikel gemäß den Ansprüchen 1 bis 3, wobei das eine oder die mehreren Alkandiole ausgewählt sind aus der Gruppe bestehend aus 1,6-Hexandiol, 1,4-Butandiol, Neopentylglykol und Kombinationen davon.

5. Artikel gemäß den Ansprüchen 1 bis 4, wobei das polymere Polyisocyanat polymeres Methylendiphenyldiisocyanat ist.

6. Artikel gemäß den Ansprüchen 1 bis 6, wobei der Artikel eine Filterkappe ist.

7. Eine Filterkappe gemäß Anspruch 6, wobei der Verlust an Zugfestigkeit der Filterkappe nach einer Alterung von 500 Stunden bei 121 Grad Celsius weniger als 20 % beträgt.

8. Artikel gemäß den Ansprüchen 1 bis 7, wobei das Reaktionsgemisch Folgendes beinhaltet:
zu 40 bis 90 Gewichtsprozent, bezogen auf die kombinierten Gewichte von (a) und (b), das eine oder die mehreren difunktionellen Polycarbonatpolyole; und
zu 15 bis 50 Gewichtsprozent, bezogen auf die kombinierten Gewichte von (a) und (b), die eine oder die mehreren organischen Polyisocyanatkomponenten.

9. Artikel gemäß den Ansprüchen 1 bis 7, wobei das Reaktionsgemisch Folgendes beinhaltet:
zu 40 bis 90 Gewichtsprozent, bezogen auf die kombinierten Gewichte von (a) und (b), das eine oder die mehreren difunktionellen Polycarbonatpolyole; und
zu 15 bis 50 Gewichtsprozent, bezogen auf die kombinierten Gewichte von (a) und (b), ein Polymethylenpolyphenylisocyanat, das Diphenylmethandiisocyanat (MDI) enthält.

10. Artikel gemäß den Ansprüchen 1 bis 9, wobei das eine oder die mehreren Kettenverlängerungsmittel ausgewählt sind aus der Gruppe bestehend aus Ethylenglykol, Diethylenglykol, Triethylenglykol, Tetraethylenglykol, Propylenglykol, Dipropylenglykol, Tripropylenglykol, 1,4-Butandiol und Diethyltoluoldiamin.

11. Artikel gemäß Anspruch 1, wobei der Artikel eine Dichtung ist.

## Revendications

1. Un article contenant un élastomère polycarbonate résistant aux hydrocarbures préparé à partir d'un mélange réactionnel comprenant :
(a) un ou plusieurs polyols de polycarbonate difonctionnels comprenant des unités de répétition d'un ou de plusieurs alcanes diols ayant 2 à 20 atomes de carbone avec une masse moléculaire moyenne en nombre comprise entre 500 et 3 000 ;
(b) un ou plusieurs constituants polyisocyanates organiques, lesquels sont des polyisocyanates polymériques ; et
(c) un ou plusieurs allongeurs de chaînes,
dans lequel l'article est sélectionné parmi des bouchons de filtres, des conduites, des joints d'étanchéité, des courroies mécaniques, des cylindres et des pièces détachées de machine.

2. L'article de la revendication 1, dans lequel le mélange réactionnel comprend :
au moins 70 % en poids desdits un ou plusieurs polyols de polycarbonate difonctionnels ; et jusqu'à 10 % en poids desdits un ou plusieurs allongeurs de chaînes.

3. L'article des revendications 1 ou 2, dans lequel le mélange réactionnel comprend en sus :
(d) un ou plusieurs catalyseurs amine.

4. L'article des revendications 1 à 3, dans lequel ces un ou plusieurs alcanes diols sont sélectionnés dans le groupe consistant en le 1,6-hexanediol, le 1,4-butanediol, le néopentyl glycol, et des combinaisons de ceux-ci.

5. L'article des revendications 1 à 4, dans lequel le polyisocyanate polymérique est du diisocyanate de diphénylméthylène polymérique.

6. L'article des revendications 1 à 6, dans lequel l'article est un bouchon de filtre.

7. Le bouchon de filtre de la revendication 6, dans lequel la perte de résistance à la traction du bouchon de filtre est inférieure à 20 % après vieillissement pendant 500 heures à 121 degrés Celsius.

8. L'article des revendications 1 à 7, dans lequel le mélange réactionnel comprend :
de 40 à 90 pour cent en poids rapporté aux poids combinés de (a) et (b) de ces un ou plusieurs polyols de polycarbonate difonctionnels ; et
de 15 à 50 pour cent en poids rapporté aux poids combinés de (a) et (b) de ces un ou plusieurs constituants polyisocyanates organiques.

9. L'article des revendications 1 à 7, dans lequel le mélange réactionnel comprend :
de 40 à 90 pour cent en poids rapporté aux poids combinés de (a) et (b) de ces un ou plusieurs polyols de polycarbonate difonctionnels ; et
de 15 à 50 pour cent en poids rapporté aux poids combinés de (a) et (b) d'un polyphénylisocyanate de polyméthylène qui contient du diisocyanate de diphénylméthane (MDI).

10. L'article des revendications 1 à 9, dans lequel ces un ou plusieurs allongeurs de chaînes sont sélectionnés dans le groupe comprenant l'éthylène glycol, le diéthylène glycol, le triéthylène glycol, le tétraéthylène glycol, le propylène glycol, le dipropylène glycol, le tripropylène glycol, le 1,4-butanediol, et la diéthyle-toluène-diamine.

11. L'article de la revendication 1 dans lequel l'article est un joint d'étanchéité.
